# EUROPÄISCHE PATENTSCHRIFT

(11) **EP 0 745 453 B1**
(45) Veröffentlichungstag und Bekanntmachung des Hinweises auf die Patenterteilung: **16.08.2000**
(21) Anmeldenummer: 96108608.9
(22) Anmeldetag: 30.05.1996
(51) Int. Cl.: B23Q 7/00, B23Q 7/04, B25J 18/02

(54) **Be- und Entladevorrichtung**
Loaders and unloaders
Chargeur et déchargeur

(30) Priorität: 31.05.1995 DE 19519964
(43) Veröffentlichungstag der Anmeldung: 04.12.1996
(73) Patentinhaber: Fibro GmbH, D-74189 Weinsberg (DE)
(72) Erfinder: Massmann, Hans-Joachim, 74831 Gundelsheim (DE); Weiser, Kurt, 74831 Gundelsheim (DE)
(74) Vertreter: Finsterwald, Manfred, Dipl.-Ing., Dipl.-Wirtsch.-Ing.

(56) Entgegenhaltungen:
- EP-A- 0 074 549
- WO-A-89/04744

## Beschreibung

Die Erfindung geht aus von einer Be- und Entladevorrichtung, insbesondere zum Be- und Entladen von Pressen, nach dem Oberbegriff des Anspruchs 1. (siehe WO-89/04 744).

Automatisch betriebene Bearbeitungsmaschinen, wie zum Beispiel Pressen, müssen mit den angelieferten zu bearbeitenden Werkstücken automatisch beladen und nach der Bearbeitung der Werkstücke wieder automatisch entladen werden. In sogenannten Pressenstraßen, in welchen die Werkstücke nacheinander mehreren Bearbeitungsschritten unterworfen werden, müssen die Werkstücke von einer Presse zur nächsten umgeladen werden. Man spricht hierbei von einer Verkettung der Pressen.

Um die Taktzeiten der automatischen Bearbeitungsmaschinen möglichst niedrig zu halten, muß das Be- und Entladen sowie Umladen so schnell wie möglich erfolgen. Darüber hinaus muß bei einer Verkettung von Bearbeitungsmaschinen auch die Überbrückung größerer Abstände möglich sein.

So ist aus der WO-89/04744 eine Be- und Entladevorrichtung bekannt, bei der an einem Träger ein sich horizontal erstreckender Ausleger angeordnet ist, der in Richtung seiner Längsachse relativ zum Träger horizontal verfahrbar ist. Am Ausleger ist ein Greiferwagen geführt, der zwischen den beiden stirnseitigen Enden des Auslegers verfahrbar ist und an dem eine Greifvorrichtung für die zu handhabenden Teile gehalten ist.

Die EP-A-74 549 beschreibt einen linear verschieblichen Arbeitsarm, bei dem an einer Halterung eine Schlittenkonstruktion geführt ist, an deren Ende ein Greifelement vorgesehen ist. Die Schlittenkonstruktion ist aus mehreren teleskopartig ineinander schiebbaren U-förmigen oder rohrförmigen Teilstücken gebildet,die durch eine Zahnstangen-Ritzel-Anordnung miteinander gekoppelt und mittels eines gemeinsamen Antriebes in vertikaler Richtung relativ zueinander verfahrbar sind.

Der Erfindung liegt die Aufgabe zugrunde, eine Be- und Entladevorrichtung der eingangs genannten Art so weiterzubilden, daß die Bewegung des Greiferwagens auf einfache Weise mit der Horizontalbewegung des Auslegers gekoppelt werden kann.

Diese Aufgabe wird durch eine Be- und Entladevorrichtung mit den Merkmalen nach Anspruch 1 gelöst.

Durch die Anordnung der Greifvorrichtung an einem längs des Auslegers verfahrbaren Greiferwagen ergibt sich eine Überlagerung zweier linearer Bewegungen, die es ermöglicht, das Be- und Entladen eines Werkstücks schnell und einfach auszuführen. Während der Ausleger beim Be- und Entladen in die Bearbeitungsmaschine ein- und ausfährt, wird der Greiferwagen längs des Auslegers entsprechend verfahren, so daß er bei in die Maschine eingefahrenem Ausleger sich an dessen eingefahrenem Ende befindet, um das Werkstück aufzunehmen oder abzulegen, und bei aus der Maschine ausgefahrenem Ausleger an dessen entgegengesetztem Ende, um dort ein neues Werkstück aufzunehmen oder ein bearbeitetes Werkstück abzulegen.

Durch das gleichzeitige Verfahren von Ausleger und daran angeordnetem Greiferwagen entspricht die Transportgeschwindigkeit des Werkstückes der Summe der Geschwindigkeiten von Ausleger und Greiferwagen, so daß der Transport des Werkstückes in einer entsprechend verkürzten Zeit erfolgt. Bei einer Verwendung zum Werkstücktransport zwischen benachbarten Bearbeitungsmaschinen können daher große Abstände schnell überbrückt werden. Ein weiterer Vorteil besteht darin, daß der Transport des Werkstückes ausschließlich durch lineare Bewegungen bewirkt wird. Die Bewegungen der erfindungsgemäßen Be- und Entladevorrichtung sind dadurch leicht steuer- und programmierbar.

Der Antrieb des Greiferwagens erfolgt durch den von der am Träger vorgesehenen Riemenscheibe angetriebenen Zahnriemen, der in seiner Längsrichtung um den Ausleger umläuft. Hierdurch kann auf besonders einfache Weise die Horizontalbewegung des Auslegers mit der Bewegung des Greiferwagens längs des Auslegers gekoppelt werden, wobei einem gegenüber dem Ausleger größeren Hub des Greiferwagens Rechnung getragen werden kann.

Nach einer Ausgestaltung der Erfindung ist für den Horizontalantrieb des Auslegers und für den Antrieb des Greiferwagens ein gemeinsamer am Träger angeordneter Antriebsmotor vorgesehen, wobei der Horizontalantrieb des Auslegers und der Antrieb des Greiferwagens über ein Zwischengetriebe miteinander gekoppelt und Ausleger und Greiferwagen stets in gleicher Richtung angetrieben sind. Das Zwischengetriebe ist insbesondere so ausgelegt, daß der Greiferwagen und der Ausleger stets gleichzeitig ihre jeweilige Endposition erreichen. Neben der Einsparung eines separaten Motors ergibt sich hierdurch eine weitere Vereinfachung der Steuerung und Programmierung der Bewegung der Greifvorrichtung. Das Über- bzw. Untersetzungsverhältnis des Zwischengetriebes kann dabei auch einstellbar sein, so daß die Endstellung des Wagens und damit der Greifvorrichtung wählbar ist.

Bevorzugt ist der Ausleger über ein Zahnstangen-Ritzel-Getriebe angetrieben, bei welchem die Zahnstange am Ausleger befestigt und das Ritzel am Träger gelagert ist.

Nach einer weiteren Ausgestaltung der Erfindung ist der Antriebsmotor seitlich zu dem Ausleger und das Ritzel, die Riemenscheibe und das Zwischengetriebe in einer sich quer zum Ausleger erstreckenden Linie angeordnet. Bevorzugt ist der Ausleger dabei aus zwei parallelen, zu einem Rahmen verbundenen Balken gebildet, wobei der Zahnstangen-Ritzel-Antrieb für den Ausleger auf dem einen Balken, der Riemenantrieb für den Greiferwagen auf dem anderen Balken und das Zwischengetriebe dazwischen angeordnet ist. Diese Ausgestaltung ergibt einen einfachen Aufbau der Antriebe für den Ausleger und den Greiferwagen.

Nach einer weiteren Ausgestaltung der Erfindung ist entlang der beiden Längsseiten des Auslegers je ein Rundstab angeordnet, auf welchem jeweils mindestens zwei am Greiferwagen gelagerte Laufräder längsverfahrbar geführt sind. Der Greiferwagen ist hierdurch auf einfache und sichere Weise am Ausleger geführt.

Der Ausleger ist bevorzugt an einem Vertikalträger angeordnet, welcher in einer Halterung vertikal verfahrbar gelagert ist. Durch Verfahren des Vertikalträgers kann der Vertikalhub des Auslegers beim Aufnehmen und Ablegen von Werkstücken bewirkt werden.

Soll die erfindungsgemäße Vorrichtung zum Be- und / oder Entladen einer Bearbeitungsmaschine eingesetzt werden, so kann die Halterung für den Vertikalträger direkt an der Bearbeitungsmaschine befestigt sein. Wird die erfindungsgemäße Vorrichtung dagegen zur Verkettung von Bearbeitungsmaschinen eingesetzt, so wird die Halterung bevorzugt an einem Laufwagen befestigt, der längs eines sich parallel zum Ausleger erstreckenden Portalbalkens verfahrbar ist, welcher zwischen zwei benachbarten Bearbeitungsmaschinen angeordnet ist und den Abstand zwischen den beiden Be- und Entladestellen überspannt.

Beim Umladen von Werkstücken bewegt sich dann neben dem Ausleger und dem daran angeordneten Greiferwagen zusätzlich der Laufwagen längs des Portalbalkens in Horizontalrichtung zwischen den beiden Bearbeitungsmaschinen hin und her. Auf diese Weise werden drei Horizontalbewegungen überlagert und die Transportgeschwindigkeit weiter erhöht. So können große Transportstrecken schnell überbrückt werden. Insbesondere kann das Umladen von Werkstücken über größere Transportstrecken ohne Umsetzen der Werkstücke erfolgen. Selbstverständlich kann diese Ausgestaltung mit Portalbalken und Laufwagen auch anderweitig eingesetzt werden.

Insgesamt ergibt sich also eine sehr schnell arbeitende Be- und Entladevorrichtung, die besonders zur Verkettung von Bearbeitungsmaschinen geeignet ist.

Ein Ausführungsbeispiel der Erfindung ist in der Zeichnung dargestellt und wird nachfolgend beschrieben. Es zeigen:
- Figur 1: eine schematische Darstellung einer ersten Variante der erfindungsgemäßen Be- und Entladevorrichtung,
- Figur 2: eine schematische Darstellung des Auslegerantriebs,
- Figur 3: eine schematische Darstellung des Greiferwagenantriebs,
- Figur 4: einen Querschnitt durch den Ausleger mit Antriebseinheit und
- Figur 5: eine zweite Variante der erfindungsgemäßen Be- und Entladevorrichtung

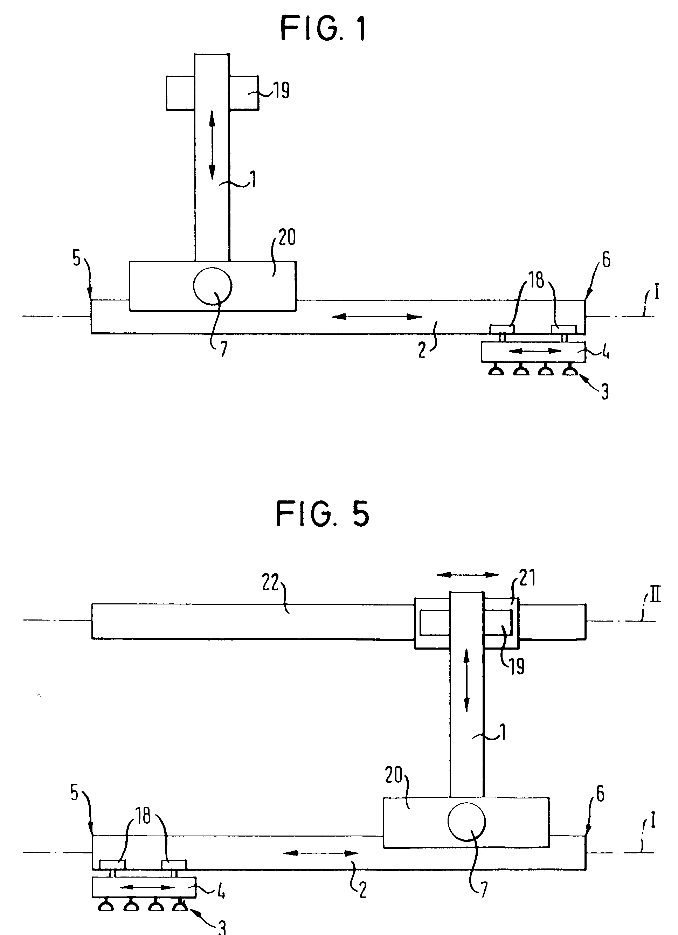

Die schematische Darstellung von Figur 1 zeigt den an einem Vertikalträger 1 angeordneten, sich horizontal erstreckenden Ausleger 2, welcher relativ zum Träger 1 in Richtung seiner Längsachse I verfahrbar ist. An dem Ausleger 2 ist ein Greiferwagen 4 mit einer Greifvorrichtung 3 angeordnet, der zwischen den beiden Enden 5 und 6 des Auslegers 2 verfahrbar ist.

Der Horizontalantrieb des Auslegers 2 und der Antrieb des Greiferwagens 4 umfassen einen gemeinsamen Antriebsmotor 7, der seitlich am Vertikalträger 1 angeordnet ist. Der Vertikalträger 1 ist in einer Halterung 19 vertikal verfahrbar gelagert. An seinem unteren Ende weist der Vertikalträger 1 ein Aufnahmegehäuse 20 für den Horizontalantrieb des Auslegers 2 und den Antrieb des Greiferwagens 4 auf.

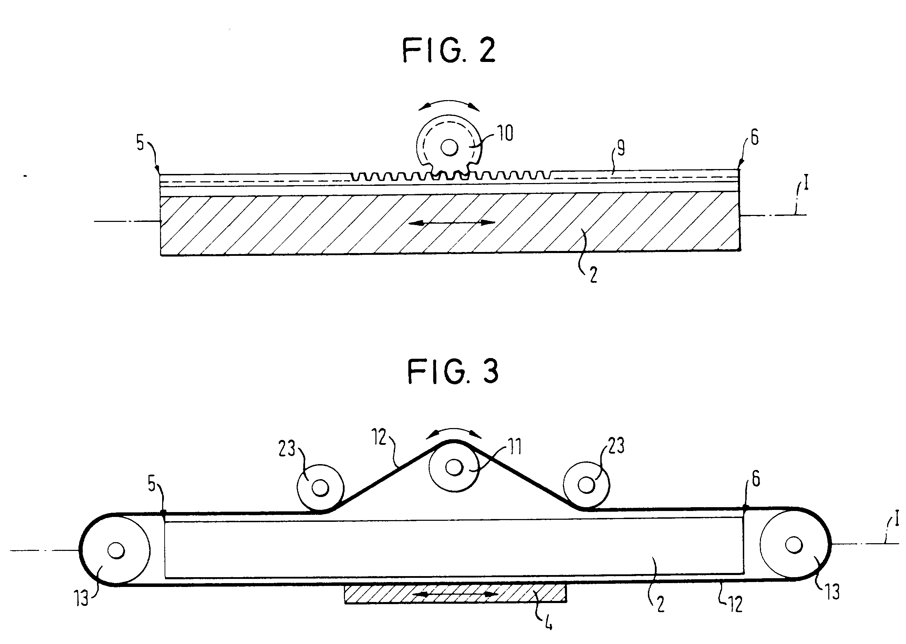

Der in Figur 2 schematisch dargestellte Horizontalantrieb des Auslegers 2 umfaßt eine am Ausleger 2 befestigte Zahnstange 9, welche sich im wesentlichen über die gesamte Länge des Auslegers 2 erstreckt. In der Zahnstange 9 kämmt ein Ritzel 10, welches vom Antriebsmotor 7 angetrieben wird, um den Ausleger 2 horizontal hin- und herzubewegen.

Der in Figur 3 schematisch dargestellte Antrieb des Greiferwagens 4 umfaßt eine von dem Antriebsmotor 7 angetriebene Zahnscheibe 11, über welche ein in Längsrichtung um den Ausleger 2 umlaufender Zahnriemen 12 geführt ist. Der Ausleger 2 weist hierfür zwei stirnseitige Umlenkrollen 13 auf, welche den Zahnriemen 12 aufspannen. Darüber hinaus sind zwei weitere Umlenkrollen 23 beidseits der Riemenscheibe 11 angeordnet. Der Zahnriemen 12 ist zickzackartig um die beiden Umlenkrollen 23 und die dazwischen angeordnete Riemenscheibe 11 geführt, um eine sichere Führung des Zahnriemens 12 über die Riemenscheibe 11 zu gewährleisten. Schließlich ist am Zahnriemen 12 der Greiferwagen 4 so befestigt, daß er zwischen den beiden stirnseitigen Enden 5, 6 des Auslegers 2 längs dessen Unterseite verfahrbar ist.

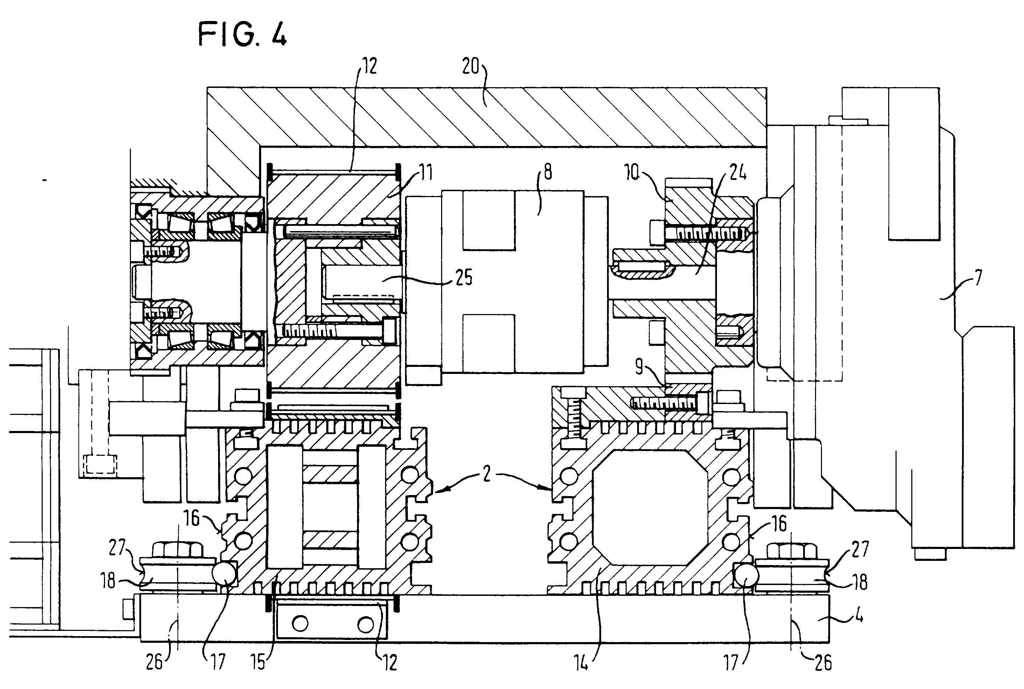

Bei der in Figur 4 im Teilquerschnitt dargestellten Variante der erfindungsgemäßen Be- und Entladevorrichtung besteht der Ausleger 2 aus zwei zueinander parallelen, im Querschnitt im wesentlichen quadratischen Auslegerbalken 14 und 15, die durch hier nicht dargestellte Querträger zu einem Rahmen verbunden sind. Dem einen Auslegerbalken 14 ist der Horizontalantrieb des Auslegers 2 und dem anderen Auslegerbalken 15 der Antrieb des Greiferwagens 4 zugeordnet. Der Auslegerbalken 14 weist hierfür an seiner Oberseite eine Zahnstange 9 auf, in welcher ein Ritzel 10 kämmt. Das Ritzel 10 sitzt auf einer Antriebswelle 24, die von einem seitlich des Auslegers 2 angeordneten Antriebsmotor 7 angetrieben wird. Die Antriebswelle 24 ist über das Ritzel 10 hinaus verlängert und mit einem als Planetengetriebe ausgebildeten Zwischengetriebe 8 verbunden.

An die zweite Seite des Zwischengetriebes 8 ist eine weitere Antriebswelle 25 angeschlossen, auf welcher eine Riemenscheibe 11 sitzt und welche andererseits am Gehäuse 20 gelagert ist. Die Riemenscheibe 11 befindet sich oberhalb des zweiten Auslegerbalkens 15, ebenso wie zwei hier nicht erkennbare Umlenkrollen 23. Über die Riemenscheibe 11 und die beiden Umlenkrollen 23 ist ein Zahnriemen 12 geführt, welcher um den zweiten Auslegerbalken 15 umläuft, der hierfür mit zwei ebenfalls hier nicht erkennbaren stirnseitigen Umlenkrollen 13 ausgestattet ist.

Die beiden Auslegerbalken 14 und 15 sind an ihren beiden voneinander abgewandten Längsseiten 16 jeweils mit einem Rundstab 17 versehen, der sich parallel zur Längsachse I des Auslegers erstreckt und als Führung für den Greiferwagen 4 dient. Der unterhalb der beiden Auslegerbalken 14 und 15 angeordnete Greiferwagen 4 ist mit mindestens vier Laufrädern 18 versehen, von denen allerdings nur zwei erkennbar sind. Die Laufräder 18 sind jeweils um eine vertikale Achse 26 drehbar auf dem Greiferwagen 4 gelagert und paarweise beidseits der beiden Auslegerbalken 14, 15 angeordnet. Die Laufräder 18 weisen in ihrer Lauffläche jeweils eine umlaufende Nut 27 auf, in welcher der Rundstab 17 sitzt. Rundstab 17 und Nut 27 wirken so als Längsführung und Lagerung für den Greiferwagen 4 zusammen.

Bei der in Figur 5 schematisch dargestellten Variante der erfindungsgemäßen Be- und Entladevorrichtung ist die Halterung 19 des Vertikalträgers 1 an einem Laufwagen 21 befestigt, welcher längs eines Portalbalkens 22 verfahrbar ist. Der Portalbalken 22 erstreckt sich parallel zum Ausleger 2 und überspannt den Abstand zwischen zwei benachbarten Be- und Entladestellen. Der Portalbalken 22 kann beispielsweise mit seinen beiden Enden an zwei benachbarten Bearbeitungsmaschinen befestigt sein.

Zum Be- und Entladen einer Bearbeitungsmaschine wird der Ausleger 2 relativ zum Vertikalträger 1 horizontal verfahren. Gleichzeitig wir der Greiferwagen 4 mit der Greifeinrichtung 3 längs des Auslegers 2 verfahren, um bei ausgefahrenem Ausleger 2 zugleich seine Endstellung an einem Ende 5 oder 6 des Auslegers 2 zu erreichen. Der zum Be- und Entladen erforderliche Vertikalhub der Greifvorrichtung 3 wird durch Verfahren des Vertikalträgers 1 in der Halterung 19 bewirkt.

Bei der in Figur 5 dargestellten Variante wird bei einem Transport von Werkstücken zwischen zwei Bearbeitungsmaschinen zusätzlich der Laufwagen 21 in Richtung der Längsachse II des Portalbalkens 22 verfahren. Hierdurch ergeben sich neben dem Vertikalhub drei überlagerte Horizontalbewegungen der Greifvorrichtung 3. Ein besonders schnelles Umladen von Werkstücken zwischen zwei benachbarten Bearbeitungsmaschinen wird dadurch ermöglicht. Der Ausleger 2 fährt dabei zunächst in die eine Bearbeitungsmaschine ein, wobei gleichzeitig der Greiferwagen 4, der Ausleger 2 und der Laufwagen 21 in die gleiche Richtung verfahren werden. Mittels der Greifvorrichtung 3 wird das Werkstück ergriffen und angehoben. Dann werden Ausleger 2, Greiferwagen 4 und Laufwagen 21 in die andere Richtung verfahren bis der Ausleger 2 in die zweite Bearbeitungsmaschine einfährt und der Greiferwagen 4 am anderen Ende des Auslegers 2 angelangt ist. Nun wird das Werkstück abgesetzt. Anschließend fährt der Ausleger 2 wieder aus, um das nächste Werkstück aufzunehmen. Als Greifvorrichtung 3 kann beispielsweise ein Sauggreifer verwendet werden.

Es ergibt sich ein sehr schneller Be- und Entlade- bzw. Umladevorgang mit großem Horizontalhub, so daß sehr kurze Taktzeiten möglich werden.

Alle Antriebsmotoren können als Wechselstrom-Servomotoren oder frequenzgeregelte Motoren ausgebildet und mit einem Wegmeßsystem ausgestattet sein. Die Bewegungen sind frei programmierbar, insbesondere über eine NC-Steuerung. Hierdurch wird eine große Flexibilität bei geringen Umrüstzeiten erreicht. Für eine schnelle Umrüstung kann zudem ein Schnellwechselsystem für die am Greiferwagen 4 vorhandene Greifeinrichtung 3 vorgesehen sein.

### Bezugszeichenliste

- 1: Vertikalträger
- 2: Ausleger
- 3: Greifvorrichtung
- 4: Greiferwagen
- 5: stirnseitiges Ende
- 6: stirnseitiges Ende
- 7: Antriebsmotor
- 8: Zwischengetriebe
- 9: Zahnstange
- 10: Ritzel
- 11: Riemenscheibe
- 12: Zahnriemen
- 13: Umlenkrolle
- 14: Auslegerbalken
- 15: Auslegerbalken
- 16: Längsseite
- 17: Rundstab
- 18: Laufrad
- 19: Halterung
- 20: Aufnahmegehäuse
- 21: Laufwagen
- 22: Portalbalken
- 23: Umlenkrolle
- 24: Antriebswelle
- 25: Antriebswelle
- 26: Drehachse
- 27: Nut
- I: Längsachse von 2
- II: Längsachse von 22

## Patentansprüche

1. Be- und Entladevorrichtung, insbesondere zum Be- und Entladen von Pressen, mit einem an einem Träger (1) angeordneten sich horizontal erstreckenden Ausle er (2), welcher in Richtung seiner Längsachse (I) relativ zum Träger (1) horizontal verfahrbar geführt sowie vertikal verfahrbar ist und eine Greifvorrichtung (3) für die zu handhabenden Teile aufweist, die an einem am Ausleger (2) geführten Greiferwagen (4) angeordnet ist, der zwischen den beiden stirnseitigen Enden (5, 6) des Auslegers (2) verfahrbar ist,
**dadurch gekennzeichnet,**
daß der Greiferwagen (4) über eine am Träger (1) gelagerte Riemenscheibe (11) und einen in Längsrichtung um den Ausleger (2) umlaufenden Zahnriemen (12) angetrieben ist, an welchem der Greiferwagen (4) befestigt ist.

2. Be- und Entladevorrichtung nach Anspruch 1,
**dadurch gekennzeichnet**,
daß für den Horizontalantrieb des Auslegers (2) und für den Antrieb des Greiferwagens (4) ein gemeinsamer am Träger (1) angeordneter Antriebsmotor (7) vorgesehen ist, daß der Horizontalantrieb des Auslegers (2) und der Antrieb des Greiferwagens (4) über ein Zwischengetriebe (8) miteinander gekoppelt sind, und daß Ausleger (2) und Greiferwagen (4) stets in gleicher Richtung angetrieben sind.

3. Be- und Entladevorrichtung nach Anspruch 2,
**dadurch gekennzeichnet**,
daß das Zwischengetriebe (8) so ausgelegt ist, daß der Greiferwagen (4) und der Ausleger (2) gleichzeitig ihre jeweilige Endposition erreichen.

4. Be- und Entladevorrichtung nach einem der Ansprüche 1 bis 3,
**dadurch gekennzeichnet**,
daß der Ausleger (2) über ein Zahnstangen-Ritzel-Getriebe angetrieben ist, wobei die Zahnstange (9) am Ausleger (2) befestigt und das Ritzel (10) am Träger (1) gelagert ist.

5. Be- und Entladevorrichtung nach einem der Ansprüche 1 bis 4,
**dadurch gekennzeichnet**,
daß der Ausleger (2) zwei stirnseitige Umlenkrollen (13) aufweist, über welche der Zahnriemen (12) geführt ist.

6. Be- und Entladevorrichtung nach einem der Ansprüche 1 bis 5,
**dadurch gekennzeichnet**,
daß der Antriebsmotor (7) seitlich zu dem Ausleger (2) angeordnet ist, und daß das Ritzel (10), die Riemenscheibe (11) und das Zwischengetriebe (8) in einer sich quer zum Ausleger (2) erstreckenden Linie angeordnet sind.

7. Be- und Entladevorrichtung nach Anspruch 6,
**dadurch gekennzeichnet,**
daß der Ausleger (2) aus zwei parallelen, zu einem Rahmen verbundenen Balken (14, 15) gebildet ist, und daß der Zahnstangen-Ritzel-Antrieb (9, 10) für den Ausleger (2) auf dem einen Balken (14), der Riemenantrieb (11, 12) für den Greiferwagen (4) auf dem anderen Balken (15) und das Zwischengetriebe (8) dazwischen angeordnet ist.

8. Be- und Entladevorrichtung nach einem der vorhergehenden Ansprüche,
**dadurch gekennzeichnet**,
daß als Lagerung für den Greiferwagen (4) entlang der beiden Längsseiten (16) des Auslegers (2) je ein Rundstab (17) angeordnet ist, auf welchem jeweils mindestens zwei am Greiferwagen (2) gelagerte Laufräder (18) längsverschieblich geführt sind.

9. Be- und Entladevorrichtung nach einem der vorhergehenden Ansprüche,
**dadurch gekennzeichnet**,
daß der Ausleger (2) an einem vertikalträger (1) angeordnet ist, der in einer Halterung (19) vertikal verfahrbar gelagert ist.

10. Be- und Entladevorrichtung nach Anspruch 9,
**dadurch gekennzeichnet**,
daß der Vertikalträger (1) an seinem unteren Ende ein Aufnahmegehäuse (20) für den Horizontalantrieb des Auslegers (2) und den Antrieb des Greiferwagens (4) aufweist.

11. Be- und Entladevorrichtung nach Anspruch 9 oder 10,
**dadurch gekennzeichnet**,
daß die Halterung (19) an einer zu be- und entladenden Einrichtung befestigt ist.

12. Be- und Entladevorrichtung nach Anspruch 9 oder 10,
**dadurch gekennzeichnet**,
daß die Halterung (19) an einem Laufwagen (21) befestigt ist, der längs eines sich parallel zum Ausleger (2) erstreckenden Portalbalkens (22) verfahrbar ist.

13. Be- und Entladevorrichtung nach Anspruch 12,
**dadurch gekennzeichnet**,
daß der Portalbalken (22) den Abstand zwischen zwei benachbarten Be- und Entladestellen überspannt.

## Claims

1. Loading and unloading apparatus, in particular for the loading and unloading of presses, comprising a horizontally extending arm (2) which is arranged on a carrier (1), which is horizontally moveably guided relative to the carrier (1) in the direction of its longitudinal axis (I) and also vertically moveable and which has a gripping device (3) for the parts to be handled, the gripper device (3) being arranged on a gripper carriage (4) which is guided on the arm (2) and is moveable between the two ends (5, 6) of the arm (2)at its two end faces, characterised in that the gripper carriage (4) is driven via a belt pulley (11) journalled at the carrier (1) and by a toothed belt (12) which circulates in the longitudinal direction around the arm (2) and to which the gripper carriage (4) is secured.

2. Loading and unloading apparatus in accordance with claim 1, characterised in that a common drive motor (7) arranged on the carrier (1) is provided for the horizontal drive of the arm (2) and for the drive of the gripper carriage (4); in that the horizontal drive of the arm (2) and the drive for the gripper carriage (4) are connected together via an intermediate transmission (8); and in that the arm (2) and the gripper carriage (4) are always driven in the same direction.

3. Loading and unloading apparatus in accordance with claim 2, characterised in that the intermediate transmission (8) is so laid out that the gripper carriage (4) and the arm (2) simultaneously attain their respective end positions.

4. Loading and unloading apparatus in accordance with one of the claims 1 to 3, characterised in that the arm (2) is driven by a rack and pinion transmission, with the rack (9) being secured to the arm (2) and the pinion (10) being journalled at the carrier (1).

5. Loading and unloading apparatus in accordance with one of the claims 1 to 4, characterised in that the arm (2) has two deflection rollers (13) at its end faces over which the toothed belt (12) is guided.

6. Loading and unloading apparatus in accordance with one of the claims 1 to 5, characterised in that the drive motor (7) is arranged to the side of the arm (2) and in that the pinion (10), the belt pulley (11) and the intermediate transmission (8) are arranged in a line extending transverse to the arm (2).

7. Loading and unloading apparatus in accordance with claim 6, characterised in that the arm (2) is formed from two parallel beams (14, 15) connected to form a frame; and in that the rack and pinion transmission (9, 10) for the arm (2) is arranged on the one beam (14) and the belt drive (11, 12) for the gripper carriage (4) is arranged on the other beam (15) with the intermediate transmission (8) therebetween.

8. Loading and unloading apparatus in accordance with one of the preceding claims, characterised in that a round bar (17) is arranged along each of the two long sides (16) of the arm (2) as a mounting for the gripper carriage (4), with at least two running wheels (18) journalled on the gripper carriage (2) being respectively longitudinally displaceably guided along each of the round bars.

9. Loading and unloading apparatus in accordance with one of the preceding claims, characterised in that the arm (2) is arranged on a vertical carrier (1) which is vertically moveably journalled in a holder (19).

10. Loading and unloading apparatus in accordance with claim 9, characterised in that the vertical carrier (1) has a mounting housing (20) at its lower end for the horizontal drive of the arm (2) and for the drive of the gripper carriage (4).

11. Loading and unloading apparatus in accordance with claim 9 or claim 10, characterised in that the holder (19) is secured to a device to be loaded and unloaded.

12. Loading and unloading apparatus in accordance with claim 9 or claim 10, characterised in that the holder (19) is secured to a running carriage (21) which is moveable along a portal beam (22) extending parallel to the arm (2).

13. Loading and unloading apparatus in accordance with claim 12, characterised in that the portal beam (22) spans the spacing between two adjacent loading and unloading positions.

## Revendications

1. Dispositif de chargement/déchargement, en particulier pour le chargement et le déchargement de presses, comprenant un bras (2) agencé sur un support (1), qui s'étend horizontalement et qui est guidé en déplacement horizontal par rapport au support (1) en direction de son axe longitudinal (I), et également en déplacement vertical, et comprenant un dispositif de saisie (3) pour les pièces à manipuler, lequel est agencé sur un chariot de saisie (4) guidé sur le bras (2) et susceptible de se déplacer entre les deux extrémités frontales (5, 6) du bras (2), caractérisé en ce que le chariot de saisie (4) est entraîné par une poulie (11) montée sur le support (1) et par une courroie dentée (12) en circulation en direction longitudinale autour du bras (2), sur laquelle est fixé le chariot de saisie (4).

2. Dispositif de chargement/déchargement selon la revendication 1, caractérisé en ce que pour l'entraînement horizontal du bras (2) et pour l'entraînement du chariot de saisie (4) est prévu un moteur d'entraînement commun (7) agencé sur le support, en ce que l'entraînement horizontal du bras (2) et l'entraînement du chariot de saisie (4) sont accouplés l'un à l'autre au moyen d'une transmission intermédiaire (8), et en ce que le bras (2) et le chariot de saisie (4) sont constamment entraînés dans la même direction.

3. Dispositif de chargement/déchargement selon la revendication 2, caractérisé en ce que la transmission intermédiaire (8) est ainsi conçue que le chariot de saisie (4) et le bras (2) atteignent simultanément leurs positions finales respectives.

4. Dispositif de chargement/déchargement selon l'une des revendications 1 à 3, caractérisé en ce que le bras (2) est entraîné par un entraînement à crémaillère-et-pignon, dans lequel la crémaillère (9) est fixée sur le bras (2) et le pignon (10) est monté sur le support (1).

5. Dispositif de chargement/déchargement selon l'une des revendications 1 à 4, caractérisé en ce que le bras (2) comprend deux galets de renvoi frontaux (13), sur lesquels est guidée la courroie dentée (12).

6. Dispositif de chargement/déchargement selon l'une des revendications 1 à 5, caractérisé en ce que le moteur d'entraînement (7) est agencé latéralement par rapport au bras (2), et en ce que le pignon (10), la poulie (11) et la transmission intermédiaire (8) sont agencés sur une ligne qui s'étend perpendiculairement au bras (2).

7. Dispositif de chargement/déchargement selon la revendication 6, caractérisé en ce que le bras (2) est formé par deux poutres parallèles (14, 15) reliées en formant un cadre, et en ce que l'entraînement à crémaillère-et-pignon (9, 10) pour le bras (2) est agencé sur l'une des poutres (14), l'entraînement à courroie (11, 12) pour le chariot de saisie (4) est agencé sur l'autre poutre (15), et la transmission intermédiaire (11) est agencée entre celles-ci.

8. Dispositif de chargement/déchargement selon l'une des revendications précédentes, caractérisé en ce qu'il est prévu à titre de montage pour le chariot de saisie (4) une barre ronde (17) agencée respectivement le long des deux côtés longitudinaux (16) du bras (2), sur lesquelles sont guidées respectivement en déplacement longitudinal au moins deux roues (18) montées sur le chariot de saisie (4).

9. Dispositif de chargement/déchargement selon l'une des revendications précédentes, caractérisé en ce que le bras (2) est agencé sur un support vertical (1), lequel est monté avec faculté de déplacement vertical dans une monture (19).

10. Dispositif de chargement/déchargement selon la revendication 9, caractérisé en ce que le support vertical (1) comprend à son extrémité inférieure à un boîtier de réception (20) pour l'entraînement horizontal du bras (2) et pour l'entraînement du chariot de saisie (4).

11. Dispositif de chargement/déchargement selon l'une ou l'autre des revendications 9 et 10, caractérisé en ce que la monture (19) est fixée sur un agencement à charger/décharger.

12. Dispositif de chargement/déchargement selon l'une ou l'autre des revendications 9 et 10, caractérisé en ce que la monture (19) est fixée sur un chariot (21), lequel est capable de se déplacer le long d'une poutre de portique (22) qui s'étend parallèlement aux bras (2).

13. Dispositif de chargement/déchargement selon la revendication 12, caractérisé en ce que la poutre de portique (22) couvre la distance entre deux emplacements de chargement/déchargement voisins.
